# FASCICULE DE BREVET EUROPEEN

(11) **EP 4 483 164 B1**
(45) Date de publication et mention de la délivrance du brevet: **18.03.2026**
(21) Numéro de dépôt: 23702628.1
(22) Date de dépôt: 06.02.2023
(51) Int. Cl.: G01N 15/02, G01N 29/14, G01N 29/44, G01N 29/46

(54) **PROCÉDÉ ET SYSTÈME DE DÉTERMINATION DYNAMIQUE D'UN TYPE DE PARTICULES ÉMISES LORS D'UNE ACTIVITÉ INDUSTRIELLE DANS UN MILIEU PHYSIQUE**
VERFAHREN UND SYSTEM ZUR DYNAMISCHEN BESTIMMUNG EINER PARTIKELART, DIE WÄHREND EINER INDUSTRIELLEN AKTIVITÄT IN EINEM PHYSIKALISCHEN MEDIUM EMITTIERT WIRD
METHOD AND SYSTEM FOR DYNAMICALLY DETERMINING A TYPE OF PARTICLES EMITTED DURING AN INDUSTRIAL ACTIVITY IN A PHYSICAL MEDIUM

(30) Priorité: 22.02.2022 FR 2201548
(43) Date de publication de la demande: 01.01.2025
(73) Titulaire: ELLONA, 31400 Toulouse (FR)
(72) Inventeur: ROMANYTSIA, Ivan, 31300 TOULOUSE (FR)
(74) Mandataire: Argyma
(86) Numéro de dépôt international: PCT/EP2023/052824
(87) Numéro de publication internationale: WO 2023/160998

(56) Documents cités:
- WO-A1-2018/149500
- FR-A1- 3 109 458
- WANGKANKLANG EKKAWIT ET AL: "System for Monitoring Progress in a Mixing and Grinding Machine Using Sound Signal Processing", MICROMACHINES, vol. 12, no. 9, 29 August 2021 (2021-08-29), pages 1041, XP055969627, DOI: 10.3390/mi12091041
- HU YONGHUI ET AL: "On-line Sizing of Pneumatically Conveyed Particles Through Acoustic Emission Detection and Signal Analysis", IEEE TRANSACTIONS ON INSTRUMENTATION AND MEASUREMENT, IEEE, USA, vol. 64, no. 5, 1 May 2015 (2015-05-01), pages 1100 - 1109, XP011577374, ISSN: 0018-9456, [retrieved on 20150403], DOI: 10.1109/TIM.2014.2355653

## Description

### Domaine technique

La présente invention concerne le domaine de l'identification de particules lors de la mise en œuvre d'une activité industrielle dans un milieu physique.

De manière connue, de nombreuses activités de production industrielle génèrent des particules en suspension dans l'air, dites aérosols, dont la concentration doit être surveillée pour préserver la santé des opérateurs. A titre d'exemple, la sciure, le soudage, le perçage et le ponçage sont des exemples d'activités produisant des aérosols, tels que des particules de verre, de bois et de métal.

Pour assurer la surveillance, il est connu de réaliser des prélèvements d'air qui sont analysés pour déterminer la concentration d'aérosols et évaluer la qualité de l'air. Les analyses de tels prélèvements sont coûteuses et chronophages. En outre, comme les prélèvements sont réalisés de manière ponctuelle, cela ne permet pas un suivi régulier.

Il est également connu d'installer sur le site de production industrielle ou d'équiper les opérateurs d'un équipement d'analyse pour surveiller la concentration d'aérosols en continu. Un tel équipement d'analyse comporte généralement un capteur, en particulier, un compteur optique de particules. Un tel capteur permet de déterminer la quantité et la distribution statistique de la taille des aérosols, à savoir une signature granulométrique. Une telle signature granulométrique peut être comparée à un ou plusieurs seuils de tolérance prédéterminés afin de détecter un potentiel danger pour l'opérateur.

En pratique, un opérateur est amené à exercer plusieurs activités différentes et ainsi à être exposé à différents types de particules dont le seuil de tolérance pour chaque type est différent. Il est ainsi nécessaire d'identifier les particules émises pour permettre une comparaison avec un seuil de tolérance pertinent. En effet, plusieurs types de particules différents peuvent présenter une signature granulométrique proche, ce qui ne permet pas de les distinguer de manière fiable. Un équipement d'analyse selon l'art antérieur ne permet donc pas de répondre de manière satisfaisante au besoin de surveillance de la qualité de l'air.

Pour éliminer cet inconvénient, une solution évidente serait de prévoir un capteur pour chaque type de particules ou de demander à l'opérateur de saisir par lui-même le type de particules susceptible d'être présent et/ou son seuil de tolérance en fonction de l'activité qu'il exerce pour permettre une mesure pertinente. Une telle solution n'est pas envisageable étant donné qu'un même opérateur peut être amené à changer très fréquemment d'activité, ce qui est contraignant et sujet à oubli.

L'invention vise ainsi à déterminer de manière dynamique et fiable le type de particules émises lors d'une activité industrielle dans un milieu physique. L'invention s'applique notamment aux particules en suspension dans l'air, mais également aux particules présentes dans les poudres.

Dans le domaine de la fabrication de poudres, tels que sur les sites de broyage de farines, il est en effet nécessaire de contrôler la qualité de la poudre, à savoir déterminer le profil granulométrique des grains de farine pour vérifier l'homogénéité de la poudre. En pratique, différents types de farine sont broyés sur un même site et comportent des seuils d'acceptation différents, ce qui nécessite de pouvoir les distinguer. Le document Wangkanklang Ekkawit ET AL: "System for Monitoring Progress in a Mixing and Grinding Machine Using Sound Signal Processing",Micromachines, vol. 12, no. 9, 29 août 2021 (2021-08-29), page 1041 décrit l'utilisation d'un traitement de signal acoustique pour surveiller la distribution granulométrique pendant un processus de mélange ou de broyage.

### PRESENTATION DE L'INVENTION

L'invention concerne un procédé de détermination dynamique d'au moins un type de particules, les particules étant émises lors de la mise en œuvre d'une activité industrielle dans un milieu physique, ledit procédé étant mis en œuvre au moyen d'au moins :
- une première base de données comprenant une pluralité de signatures sonores de référence, chacune étant associée à une première liste de types de particules, chaque signature sonore de référence étant caractéristique d'au moins une activité industrielle, et
- une deuxième base de données comprenant une pluralité de signatures granulométriques de référence, chacune étant associée à une deuxième liste de types de particules, chaque signature granulométrique de référence étant caractéristique d'au moins un type de particules,
- ledit procédé comprenant :
   - une étape de mesure sonore de l'activité industrielle dans le milieu physique, de manière à déterminer une signature sonore courante,
   - une étape de détermination, au moyen de la première base de données, d'une première liste de types de particules à partir de la signature sonore courante,
   - une étape de mesure granulométrique des particules émises dans le milieu physique, de manière à déterminer une signature granulométrique courante,
   - une étape de détermination, au moyen de la deuxième base de données d'une deuxième liste de types de particules à partir de la signature granulométrique courante,
   - une étape de détermination d'au moins un type de particules par intersection de la première liste de types de particules et de la deuxième liste de types de particules.

L'invention permet d'identifier un type de particules sur son site d'émission de manière dynamique, simple et fiable. L'invention trouve un intérêt particulier dans le contrôle de la qualité de l'air au niveau des sites de production industrielle afin de vérifier que les particules émises par une activité industrielle ne dépassent pas un seuil d'acceptation prédéterminé. L'invention trouve également un intérêt particulier dans le contrôle de la qualité d'une poudre afin de vérifier que son niveau d'homogénéité est suffisant.

L'invention est avantageusement basée sur la prise en compte d'une signature sonore de l'activité d'émission de particules, qui est croisée à une signature granulométrique pour permettre l'identification du type de particules. Une telle signature sonore est avantageusement simple à mesurer et discriminante. La signature sonore permet notamment de distinguer de manière fiable deux types de particules de signature granulométrique proche. Ainsi, à chaque fois qu'un opérateur change d'activité, celui-ci bénéficie d'une surveillance adaptée des particules émises, ce qui garantit sa sécurité et sa santé.

Selon un aspect de l'invention, ledit procédé est également mis en œuvre au moyen d'une base de données de seuils comprenant une pluralité de types de particules, chacun étant associé à un seuil d'acceptation, ledit procédé comprenant :
- Une étape de détermination, au moyen de la base de données de seuils, d'un seuil d'acceptation à partir du type de particules déterminé, et
- une étape d'émission d'une alarme si la signature granulométrique courante dépasse le seuil d'acceptation.

Le procédé est avantageusement mis en œuvre directement sur le site d'émission de particules, sans attente, et de manière automatisée, par exemple de manière périodique. Le procédé permet ainsi une surveillance autonome du niveau de particules dans un milieu physique donné, qui alerte l'utilisateur en cas de dépassement d'un seuil de tolérance. Une alarme adaptée peut être émise pour chaque activité réalisée par l'opérateur.

Selon un aspect de l'invention, chaque signature sonore de référence de la première base de données comporte au moins une fréquence caractéristique de l'activité industrielle associée, et de préférence un spectre sonore caractéristique de l'activité industrielle associée. Chaque activité industrielle présente avantageusement un spectre sonore caractéristique associé suffisamment différent des autres, qui permettent de facilement l'identifier.

Selon un aspect de l'invention, l'étape de mesure granulométrique est mise en œuvre au moyen d'un compteur optique de particules. Un compteur optique de particules permet une mesure précise et fiable de la répartition des tailles des particules et de leur concentration.

Selon un aspect de l'invention, l'étape de détermination est mise en œuvre en déterminant, parmi les signatures sonores de référence de la première base de données, celle la plus proche de la signature sonore courante.

Selon un aspect de l'invention, l'étape de détermination est mise en œuvre au moyen d'un module statistique de classification, de préférence de type à vecteur de support ou réseau de neurones.

Selon un aspect de l'invention, le procédé comporte également une étape préliminaire d'entraînement du module statistique de classification à partir d'une pluralité de signatures sonores d'entraînement, le module statistique de classification étant configuré pour déterminer la signature sonore de référence la plus proche dans la première base de données

Selon un aspect préféré, l'étape de détermination est mise en œuvre en déterminant, parmi les signatures granulométriques de référence de la deuxième base de données, celle la plus proche de la signature granulométrique courante.

Selon un aspect préféré, l'étape de détermination est mise en œuvre au moyen d'un module statistique de classification, de préférence de type à vecteur de support ou réseau de neurones.

Selon un aspect préféré, le procédé comporte une étape préliminaire d'entraînement du module statistique de classification à partir d'une pluralité de signatures granulométriques d'entraînement, le module statistique de classification étant configuré pour déterminer la signature granulométrique de référence la plus proche dans la deuxième base de données.

Selon un aspect de l'invention, le procédé est également mis en œuvre au moyen d'une troisième base de données comprenant une pluralité de signatures physiques de référence, chacune étant associée à une troisième liste de types de particules, chaque signature physique de référence étant caractéristique du milieu physique, ledit procédé comprenant :
- une étape de mesure d'une signature physique courante du milieu physique,
- une étape de détermination, au moyen de la troisième base de données, d'une troisième liste de types de particules à partir de la signature physique courante,
- l'étape de détermination étant en outre mise en œuvre par intersection avec la troisième liste de types de particules.

Le procédé croise ainsi trois types de mesure différents pour identifier le type de particules, à savoir une mesure de la granulométrie des particules, une mesure du son émis par l'activité industrielle et une mesure d'un paramètre du milieu physique. Cela augmente la précision et la fiabilité de la méthode.

Selon un aspect de l'invention, la signature physique courante comprend un ou plusieurs des éléments suivants : une mesure de température, une mesure d'humidité et une mesure d'odeur du milieu physique. Une telle signature physique permet, en combinaison avec la signature sonore et la signature granulométrique, d'augmenter la précision et la fiabilité de la méthode,

Selon un aspect préféré, l'étape de détermination est mise en œuvre en déterminant, parmi les signatures physiques de référence de la deuxième base de données, celle la plus proche de la signature physique courante.

Selon un aspect préféré, l'étape de détermination est mise en œuvre au moyen d'un module statistique de classification, de préférence de type à vecteur de support ou réseau de neurones.

Selon un aspect préféré, le procédé comporte une étape préliminaire d'entraînement du module statistique de classification à partir d'une pluralité de signatures physiques d'entraînement, le module statistique de classification étant configuré pour déterminer la signature physique de référence la plus proche dans la deuxième base de données.

L'invention concerne également un système de détermination dynamique d'au moins un type de particules pour la mise en œuvre du procédé tel que décrit précédemment, les particules étant émises lors de la mise en œuvre d'une activité industrielle dans un milieu physique, ledit système comprenant au moins :
- une première base de données comprenant une pluralité de signatures sonores de référence, chacune étant associée à une première liste de types de particules, chaque signature sonore de référence étant caractéristique d'au moins une activité industrielle, et
- une deuxième base de données comprenant une pluralité de signatures granulométriques de référence, chacune étant associée à une deuxième liste de types de particules, chaque signature granulométrique de référence étant caractéristique d'au moins un type de particules,
- un premier organe de mesure configuré pour mesurer une signature sonore courante de l'activité industrielle dans le milieu physique,
- un deuxième organe de mesure configuré pour mesurer une signature granulométrique courante des particules dans le milieu physique, et
- un organe de contrôle configuré pour déterminer :
   - au moyen de la première base de données, une première liste de types de particules à partir de la signature sonore courante,
   - au moyen de la deuxième base de données, une deuxième liste de types de particules à partir de la signature granulométrique courante,
   - un type de particules par intersection de la première liste de types de particules et de la deuxième liste de types de particules.

Selon un aspect préféré, le deuxième organe de mesure comporte un capteur compteur optique de particules.

Selon un aspect préféré, l'organe de contrôle comporte un module statistique de classification, de préférence de type à vecteur de support ou réseau de neurones.

De préférence, le système comporte également :
- une base de données de seuils comprenant une pluralité de types de particules, chacun étant associé à un seuil d'acceptation,
- ledit organe de contrôle étant configuré pour déterminer, au moyen de la base de données de seuils, le seuil d'acceptation à partir du type de particules déterminé, et pour émettre une alarme si la signature granulométrique courante dépasse le seuil d'acceptation.

De préférence, le système comporte également :
- une troisième base de données comprenant une pluralité de signatures physiques de référence, chacune étant associée à une troisième liste de types de particules, chaque signature physique de référence étant caractéristique du milieu physique,
- un troisième organe de mesure configuré pour mesurer une signature physique courante du milieu physique,
- ledit organe de contrôle étant configuré pour déterminer :
   - au moyen de la troisième base de données, une troisième liste de types de particules à partir de la signature physique courante,
   - un type de particules par intersection avec la troisième liste de types de particules.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique des étapes d'un procédé de détermination dynamique d'un type de particules selon un mode de réalisation de l'invention.
La [Fig.2] est une représentation schématique d'une activité de perçage d'un panneau de chêne mise en œuvre à proximité d'un système de détermination dynamique du type de particules selon une forme de réalisation de l'invention.
La [Fig.3] est une représentation schématique structurelle du système de détermination dynamique du type de particules de la [Fig.2].
La [Fig.4] est une représentation schématique des étapes de détermination des listes de types de particules, à partir des bases de données, et leur intersection pour déterminer le type de particules selon le procédé de la [Fig.1].
La [Fig.5] est une représentation schématique d'un procédé de détermination dynamique du type de particules selon un autre mode de réalisation de l'invention.
La [Fig.6] est une représentation schématique d'un système de détermination dynamique du type de particules pour mettre en œuvre le procédé de la [Fig.5].
La [Fig.7] est une représentation schématique d'un procédé de détermination dynamique d'un type de particules selon un autre mode de réalisation de l'invention.
La [Fig.8] est une représentation schématique d'un système de détermination dynamique du type de particules pour mettre en œuvre le procédé de la [Fig.7].
La [Fig.9] est une représentation schématique d'un procédé de détermination dynamique d'un type de particules selon un autre mode de réalisation de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

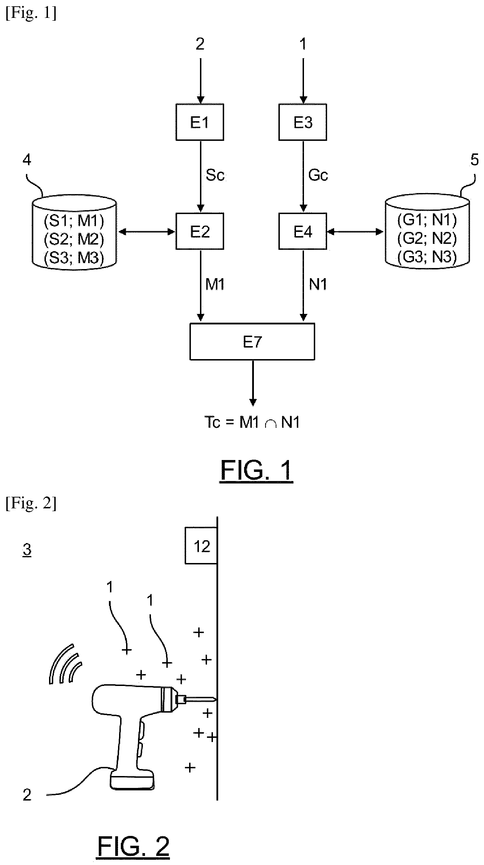

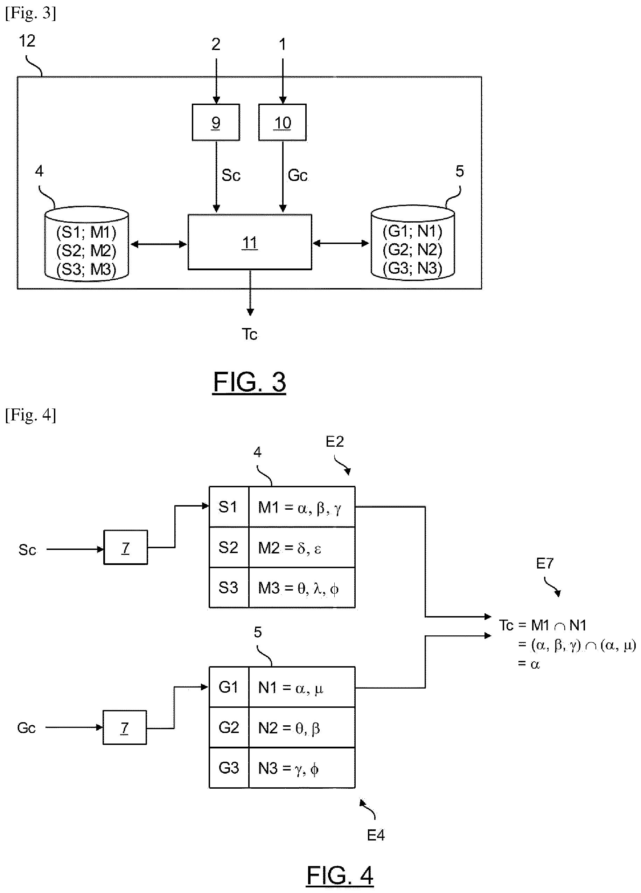

L'invention concerne un procédé (voir [Fig.1]) et un système 12 (voir [Fig.3]) de détermination d'un ou de plusieurs types Tc de particules 1 émises dans un milieu physique 3 lors d'une activité industrielle 2. L'invention permet une identification dynamique et fiable. L'invention vise notamment à avertir un opérateur lorsqu'un ou plusieurs types de particules dépassent un seuil d'acceptation prédéterminé.

Comme illustré sur la [Fig.2], l'invention est notamment destinée à être mise en œuvre sur les sites de production industrielle afin de surveiller la concentration de particules en suspension dans l'air, dites aérosols, générées par les activités du site et ainsi préserver la santé des opérateurs. Le perçage, le soudage, la sciure, le ponçage, le démolissement de bâtiments et les travaux routiers sont des exemples d'activités industrielles émettant des particules lors de leur mise en œuvre, telles que des particules de bois, de métal ou de verre.

Un autre exemple d'application de l'invention est le contrôle de la qualité sur les sites de fabrication de poudre, par exemple sur les sites de broyage de farine. L'invention permet notamment de vérifier l'homogénéité de la poudre par identification et comparaison avec des seuils d'acceptation.

D'autres exemples d'application de l'invention sont la surveillance de la concentration de pollens en suspension lors d'activités d'agriculture, d'élagage, de jardinage, etc. D'autres exemples d'application de l'invention sont la surveillance du niveau de particules toxiques dans un environnement fermé, tel que la fumée de cigarettes ou le déclenchement d'un incendie.

Par la suite, on entend par « activité industrielle » tout travail ou action manuel et/ou automatisé dont la mise en œuvre tend à émettre des particules, l'émission des particules étant le but recherché par l'activité (par exemple, le broyage de farine) ou une conséquence induite (par exemple, le perçage, le soudage, la sciure et le ponçage). Par la suite, le terme « particules » englobe notamment les particules en suspension dans l'air, dites aérosols, et celles présentes dans une poudre.

Selon l'invention, comme illustré sur la [Fig.1], le procédé est mis en œuvre au moyen de :
- une première base de données 4 comprenant plusieurs signatures sonores de référence S1, S2, S3, chacune étant associée à une première liste de types de particules M1, M2, M3, chaque signature sonore de référence S1, S2, S3 étant caractéristique d'une ou de plusieurs activités industrielles 2, et
- une deuxième base de données 5 comprenant plusieurs signatures granulométriques de référence G1, G2, G3, chacune étant associée à une deuxième liste de types de particules N1, N2, N3, chaque signature granulométrique de référence étant caractéristique d'au moins un type de particules 1.

Toujours selon l'invention et comme illustré sur la [Fig.1], le procédé comprend :
- une étape de mesure sonore E1 de l'activité industrielle 2 dans le milieu physique 3, de manière à déterminer une signature sonore courante Sc,
- une étape de détermination E2, au moyen de la première base de données 4, d'une première liste de types de particules M1 à partir de la signature sonore courante Sc,
- une étape de mesure granulométrique E3 des particules 1 émises dans le milieu physique 3, de manière à déterminer une signature granulométrique courante Gc,
- une étape de détermination E4, au moyen de la deuxième base de données 5 d'une deuxième liste de types de particules N1 à partir de la signature granulométrique courante Gc, et
- une étape de détermination E7 du ou des types Tc de particules 1 par intersection de la première liste de types de particules M1 et de la deuxième liste de types de particules N1.

Comme illustré sur la [Fig.2], le procédé est mis en œuvre dans le milieu physique 3 des particules 1, à proximité de l'activité industrielle 2. Le système 12 est configuré pour mettre en œuvre le procédé durant l'activité industrielle 2 et est installé de manière fixe dans le milieu physique 3 à proximité de l'activité industrielle 2. Dans d'autres formes de réalisation, le système 12 est portable, notamment configuré pour être porté par un opérateur. Ceci permet de réaliser des mesures sonores et granulométriques fiables et pertinentes afin d'identifier l'activité industrielle et les particules en suspension. De manière préférée, le système 12 possède une batterie de manière à être autonome.

En référence à la [Fig.3], le système 12 comprend, outre la première base de données 4 et la deuxième base de données 5 précédemment décrites :
- un premier organe de mesure 9 configuré pour mesurer une signature sonore courante Sc de l'activité industrielle 2 dans le milieu physique 3,
- un deuxième organe de mesure 10 configuré pour mesurer une signature granulométrique courante Gc des particules 1 dans le milieu physique 3, et
- un organe de contrôle 11 configuré pour déterminer :
   - au moyen de la première base de données 4, une première liste de types de particules M1 à partir de la signature sonore courante Sc,
   - au moyen de la deuxième base de données 5, une deuxième liste de types de particules N1 à partir de la signature granulométrique courante Gc,
   - un type Tc de particules 1 par intersection des listes de types de particules M1, N1.

On décrit par la suite plus précisément chacune des étapes du procédé dans l'exemple d'une activité de perçage d'un panneau en chêne.

En référence aux figures 1 et 3, l'étape de mesure sonore E1 est mise en œuvre par le premier organe de mesure 9 durant l'activité industrielle 2. L'étape de mesure sonore E1 permet de déterminer une signature sonore courante Sc de l'activité industrielle 2. Le premier organe de mesure 9 se présente de préférence sous la forme d'un microphone configuré pour enregistrer le son émis lors de la mise en œuvre de l'activité industrielle 2.

De préférence, la signature sonore courante Sc est déterminée à partir d'au moins un enregistrement sonore temporel pour être représentative de l'activité industrielle 2. De préférence, la signature sonore courante Sc est déterminée à partir d'une transformation de Fourier de l'enregistrement sonore temporel. Une telle signature sonore peut être comparée de manière pratique avec les signatures sonores S1, S2, S3 de la première base de données 4.

En référence aux figures 1 et 4, l'étape de détermination E2 d'une première liste de particules M1 est mise en œuvre après l'étape de mesure E1 de la signature sonore courante Sc. La première liste de types de particules M1 est sélectionnée dans la première base de données 4 parmi l'ensemble des listes de types de particules M1, M2, M3. La première liste de particules M1 choisie correspond à celle dont la signature sonore de référence S1, S2, S3 est la plus proche de la signature sonore courante Sc.

En référence à la [Fig.4], on considère dans cet exemple que la première base de données 4 est la suivante :
- S1 est une signature sonore de référence d'une activité de perçage associée à une première liste de particules M1 comportant le chêne α, l'aggloméré β et le plastique γ.
- S2 est une signature sonore de référence d'une activité de soudage associée à une première liste de particules M2 comportant l'aluminium δ et le titane ε.
- S3 est une signature sonore de référence d'une activité de broyage associée à une première liste de particules M3 comportant la farine T45 θ, la farine T55 λ et la farine T65 ϕ.

A noter que la taille des bases de données 4, 5, 6, 8 utilisées dans l'invention, restreinte dans l'exemple présenté ici, est de préférence étendue et dépend en pratique du domaine d'application.

Comme illustré sur les figures 1, 3 et 4, l'étape de détermination E2 est mise en œuvre par l'organe de contrôle 11, et de préférence par un module statistique de classification 7 de l'organe de contrôle 11. Le module statistique de classification 7, du type réseau de neurones ou à vecteur de support, est configuré pour comparer la signature sonore courante Sc aux signatures sonores de référence S1, S2, S3 de la première base de données 4 et pour déterminer celle qui est la plus proche, S1 dans cet exemple. L'organe de contrôle 11 est ensuite configuré pour sélectionner la première liste de particules M1 associée à la signature sonore de référence choisie S1, à savoir le chêne α, l'aggloméré β et le plastique γ dans cet exemple. De préférence, l'organe de contrôle 11 se présente sous la forme d'un calculateur ou analogue.

De préférence, chaque signature sonore de référence S1, S2, S3 comporte au moins une fréquence caractéristique de l'activité industrielle 2 à laquelle elle est associée. De préférence, chaque signature sonore de référence S1, S2, S3 comporte un spectre sonore caractéristique de l'activité industrielle. Lors de l'étape de détermination E2, le module statistique de classification 7 compare le spectre sonore de la signature sonore courante Sc aux spectres sonores des signatures sonores de référence S1, S2, S3. La signature sonore de référence S1 choisie est celle dont le spectre sonore caractéristique est le moins éloigné de celui de la signature sonore courante Sc.

De préférence, le procédé comporte une étape préliminaire d'entraînement E0 du module statistique de classification 7 à partir de signatures sonores d'entraînement Se.

Comme illustré sur la [Fig.1], les étapes de mesure granulométrique E3 et détermination E4 d'une deuxième liste de types de particules M2 sont mises en œuvre indépendamment des étapes de mesure sonore E1 et de détermination E2 de la première liste de types de particules M1, de préférence en parallèle pour un procédé plus rapide.

En référence aux figures 1 et 3, l'étape de mesure granulométrique E3 est mise en œuvre par le deuxième organe de mesure 10, de préférence comportant un capteur compteur optique de particules. Lors de l'étape de mesure granulométrique E3, le capteur compteur optique de particules est configuré pour mesurer une signature granulométrique courante Gc des particules 1 dans le milieu physique 3, dans cet exemple, les aérosols émis par le perçage du panneau de chêne. Une telle signature granulométrique Gc comporte une concentration et un histogramme de la répartition des tailles des aérosols mesurés dans le milieu physique 3. La mesure au moyen d'un capteur compteur optique de particules est connue en soi de l'homme du métier et n'est donc pas décrite davantage.

En référence aux figures 1 et 3, l'étape de détermination E4 d'une deuxième liste de particules N1 est mise en œuvre après l'étape de mesure E3 de la signature granulométrique courante Gc. La deuxième liste de types de particules N1 est sélectionnée dans la deuxième base de données 5 parmi l'ensemble des listes de types de particules N1, N2, N3. La deuxième liste de particules N1 choisie correspond à celle dont la signature granulométrique de référence G1, G2, G3 est la plus proche de la signature granulométrique courante Gc.

Comme illustré sur la [Fig.4], on considère dans cet exemple que la deuxième base de données 5 est la suivante :
- G1 est une signature granulométrique de référence associée à une deuxième liste de particules N1 comportant le chêne α et le verre µ.
- G2 est une signature granulométrique de référence associée à une deuxième liste de particules N2 comportant la farine T45 θ et l'aggloméré β.
- G3 est une signature granulométrique de référence associée à une deuxième liste de particules N3 comportant le plastique γ et la farine T65 ϕ.

Comme illustré sur les figures 1, 3 et 4, l'étape de détermination E4 est mise en œuvre par l'organe de contrôle 11, et de préférence par le module statistique de classification 7. Le module statistique de classification 7 est configuré pour comparer l'histogramme de la signature granulométrique courante Gc à celui des signatures granulométriques de référence G1, G2, G3 de la deuxième base de données 5 et pour déterminer celle qui est la plus proche, G1 dans cet exemple. L'organe de contrôle 11 est ensuite configuré pour sélectionner la deuxième liste de particules N1 associée à la signature sonore de référence G1 la plus proche, à savoir le chêne α et le verre µ dans cet exemple.

En référence aux figures 1, 3 et 4, l'étape de détermination E7 du type de particules Tc est mise en œuvre après les étapes de détermination E2, E4 des listes de types de particules M1, N1. Lors de l'étape de détermination E7, l'organe de contrôle 11 effectue une opération d'intersection entre la première liste de types de particules M1 et la deuxième liste de types de particules N1 : Tc = M1 ∩ N1. Autrement dit, le type de particules Tc déterminé par l'organe de contrôle 11 correspond à/aux éléments communs à la première et à la deuxième liste de types de particules M1, N1, dans cet exemple le chêne α.

Ainsi, le type de particules Tc est déterminé au moyen de deux mesures différentes pour permettre une identification fiable et pertinente. De manière avantageuse, la combinaison d'une signature sonore et d'une signature granulométrique forme un ensemble discriminant du type de particules Tc. En effet, deux types de particules différents de signature granulométrique proche peuvent être distingués grâce à leur signature sonore, et inversement.

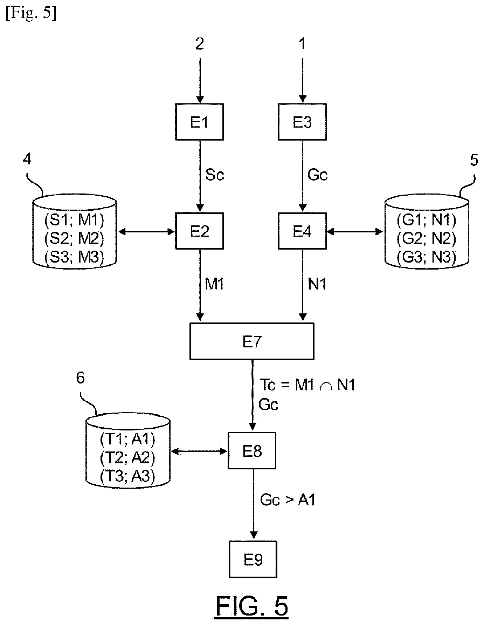

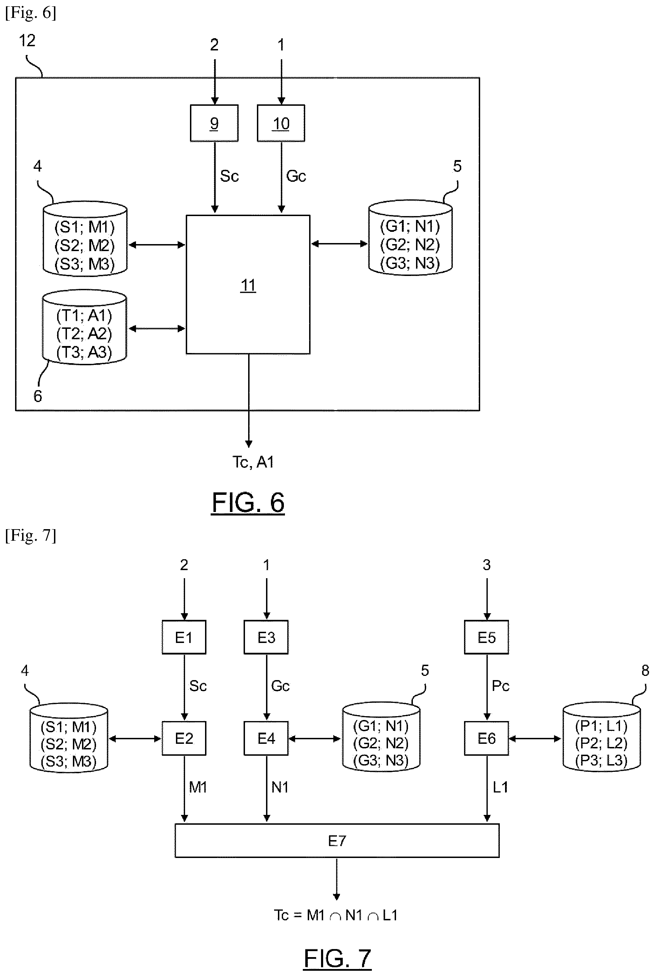

Selon un aspect préféré de l'invention illustré sur les figures 5 et 6, le procédé est également mis en œuvre au moyen d'une base de données de seuils 6 comprenant plusieurs types T1, T2, T3 de particules 1, chacun étant associé à un seuil d'acceptation A1, A2, A3.

Comme illustré sur la [Fig.5], le procédé comprend une étape de détermination E8, lors de laquelle l'organe de contrôle 11 détermine, au moyen de la base de données de seuils 6, le seuil d'acceptation A1 associé au type Tc de particules 1 déterminé, dans cet exemple le chêne. Le seuil d'acceptation A1 correspond à la concentration maximale de particules de chêne en suspension dans l'air autorisée pour préserver la santé de l'opérateur réalisant l'opération de perçage du panneau en chêne α.

Comme illustré sur la [Fig.5], après la mise en œuvre de l'étape de détermination E8, le procédé comprend une étape d'émission d'une alarme E9 si la signature granulométrique courante Gc dépasse le seuil d'acceptation A1. L'étape d'émission E9 permet d'avertir l'opérateur d'un potentiel dépassement, par exemple au moyen d'un signal sonore, informatique ou visuel.

De manière alternative, le seuil d'acceptation correspond au niveau d'hétérogénéité maximal autorisé entre les particules de la poudre que l'on souhaite identifier, par exemple de la farine T55. L'étape d'émission E9 permet alors d'avertir l'opérateur de la qualité insuffisante de la poudre.

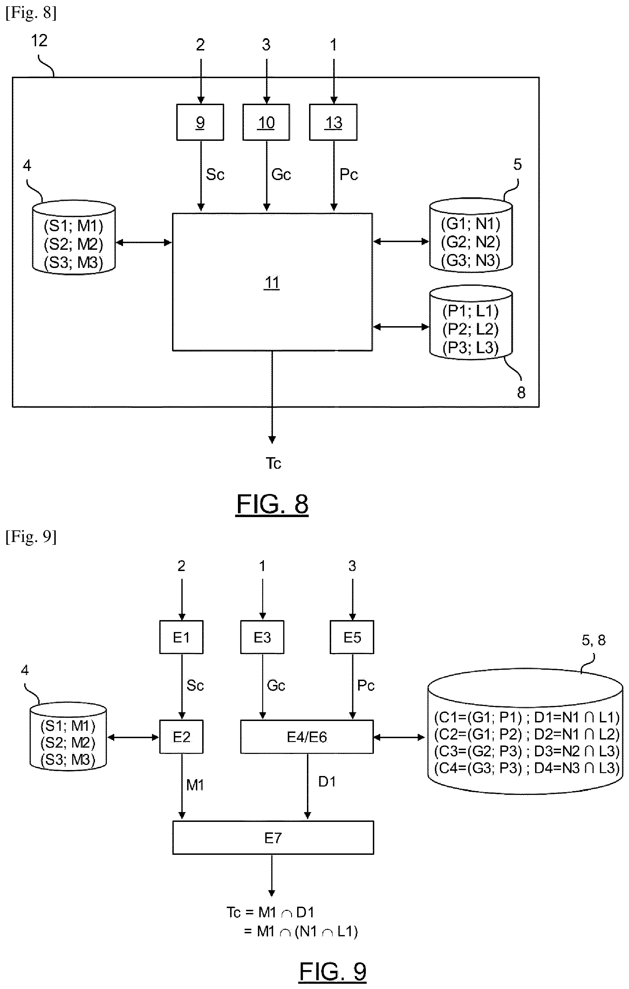

Selon un aspect préféré de l'invention illustré sur les figures 7 et 8, le procédé est également mis en œuvre au moyen d'une troisième base de données 8 comprenant une pluralité de signatures physiques de référence P1, P2, P3, chacune étant associée à une troisième liste de types de particules L1, L2, L3, chaque signature physique de référence P1, P2, P3 étant caractéristique du milieu physique 3.

Comme illustré sur la [Fig.7], le procédé comprend :
- une étape de mesure E5 d'une signature physique courante Pc du milieu physique 3,
- une étape de détermination E6, au moyen de la troisième base de données 8, d'une troisième liste de types de particules L1 à partir de la signature physique courante Pc,
- l'étape de détermination E7 étant en outre mise en œuvre par intersection avec la troisième liste de types de particules L1.

Selon un aspect préféré de l'invention, la signature physique courante Pc comporte une mesure de température, d'humidité et/ou d'odeur du milieu physique 3, à savoir de l'air environnant dans l'exemple d'une activité de perçage d'un panneau en chêne. Le type de particules Tc est avantageusement déterminé au moyen de trois mesures différentes pour permettre une identification plus fiable et pertinente. Une telle signature physique courante augmente le caractère discriminant de l'ensemble formé par la signature sonore et la signature granulométrique.

Comme illustré sur la [Fig.7], les étapes de mesure E8 et de détermination E9 sont mises en œuvre indépendamment des étapes de mesure sonore E1, de mesure granulométrique E3 et de détermination E2, E4 des autres listes de types de particules M1, N1, de préférence en parallèle pour un procédé plus rapide.

En référence aux figures 7 et 8, l'étape de mesure E8 est mise en œuvre par un troisième organe de mesure 10, tel qu'un capteur de température, d'humidité, un capteur électrochimique ou à base d'oxyde métallique (capteur MOX). L'étape de détermination E9 d'une troisième liste de particules L1 est mise en œuvre après l'étape de mesure E8. La troisième liste de particules L1 choisie correspond à celle dont la signature physique de référence P1, P2, P3 est la plus proche de la signature physique courante Pc, à savoir P1 dans cet exemple. L'étape de détermination E4 est mise en œuvre par l'organe de contrôle 11, et de préférence par le module statistique de classification 7.

En référence aux figures 7 et 8, lors de l'étape de détermination E7, l'organe de contrôle 11 effectue une opération d'intersection entre la première liste de types de particules M1, la deuxième liste de types de particules et la troisième liste de types de particules L1 : Tc = M1 ∩ N1 ∩ L1.

Selon un mode de réalisation préféré de l'invention illustré sur la [Fig.9], la deuxième base de données 5 et la troisième base de données 8 sont combinées ensemble et comportent plusieurs combinaisons d'activités de référence C1-C4. Chaque combinaison d'activité de référence C1-C4 :
- Comporte d'une part une signature sonore de référence S1, S2, S3 et d'autre part une signature physique de référence P1, P2, P3,
- Est associée à une liste combinée de types de particules D1-D4.

Chaque liste combinée de types de particules D1-D4 est l'intersection d'une deuxième liste de types de particules N1, N2, N3 et d'une troisième liste de types de particules L1, L2, L3, à savoir celles associées à la signature sonore de référence S1, S2, S3 et à la signature physique de référence P1, P2, P3. A titre d'exemple, la combinaison d'activité de référence C2 = (S1 ; P2) est associée à une liste combinée de types de particules D2 = N1 ∩ L2. La signature physique de référence P1, P2, P3 est ainsi une mesure auxiliaire de la signature sonore de référence S1, S2, S3, qui permet de déterminer de manière précise et fiable l'activité industrielle 2 mise en œuvre. De manière auxiliaire, il pourrait également être prévu de monter une puce électronique, par exemple de type NFC ou Bluetooth, sur les systèmes de mise en œuvre de l'activité industrielle, tels qu'une scie ou une perceuse, et de déterminer l'activité industrielle mise en œuvre par lecture des puces électroniques situées à proximité.

En référence à la [Fig.9], l'étape de détermination E4 et l'étape de détermination E6 forment une seule et même étape, mise en œuvre après les étapes de mesure E3 et E5, lors de laquelle une liste combinée de types de particules D1-D4 est déterminée à partir de la signature sonore courante Sc et de la signature physique courante Pc. Plus précisément, le module de traitement statistique 7 détermine la combinaison d'activité de référence C1-C4 la plus proche de la signature sonore courante Sc et de la signature physique courante Pc. L'organe de contrôle 11 sélectionne ensuite la liste combinée de types de particules D1-D4 associée, qui est utilisée pour l'étape de détermination E7 du type Tc de particules 1.

## Revendications

1. Procédé de détermination dynamique d'au moins un type (Tc) de particules (1), les particules (1) étant émises lors de la mise en œuvre d'une activité industrielle (2) dans un milieu physique (3), ledit procédé étant mis en œuvre au moyen d'au moins :
• une première base de données (4) comprenant une pluralité de signatures sonores de référence (S1, S2, S3), chacune étant associée à une première liste de types de particules (M1, M2, M3), chaque signature sonore de référence (S1, S2, S3) étant caractéristique d'au moins une activité industrielle (2), et
• une deuxième base de données (5) comprenant une pluralité de signatures granulométriques de référence (G1, G2, G3), chacune étant associée à une deuxième liste de types de particules (N1, N2, N3), chaque signature granulométrique de référence (G1, G2, G3) étant caractéristique d'au moins un type de particules (1),
• ledit procédé comprenant :
• une étape de mesure sonore (E1) de l'activité industrielle (2) dans le milieu physique (3), de manière à déterminer une signature sonore courante (Sc),
• une étape de détermination (E2), au moyen de la première base de données (4), d'une première liste de types de particules (M1) à partir de la signature sonore courante (Sc),
• une étape de mesure granulométrique (E3) des particules (1) émises dans le milieu physique (3), de manière à déterminer une signature granulométrique courante (Gc),
• une étape de détermination (E4), au moyen de la deuxième base de données (5) d'une deuxième liste de types de particules (N1) à partir de la signature granulométrique courante (Gc),
• une étape de détermination (E7) d'au moins un type (Tc) de particules (1) par intersection de la première liste de types de particules (M1) et de la deuxième liste de types de particules (N1).

2. Procédé selon la revendication 1, ledit procédé étant également mis en œuvre au moyen d'une base de données de seuils (6) comprenant une pluralité de types (T1, T2, T3) de particules (1), chacun étant associé à un seuil d'acceptation (A1, A2, A3), ledit procédé comprenant :
• une étape de détermination (E8), au moyen de la base de données de seuils (6), d'un seuil d'acceptation (A1) à partir du type (Tc) de particules (1) déterminé, et
• une étape d'émission d'une alarme (E9) si la signature granulométrique courante (Gc) dépasse le seuil d'acceptation (A1).

3. Procédé selon l'une des revendications 1 et 2, dans lequel chaque signature sonore de référence (S1, S2, S3) de la première base de données (4) comporte au moins une fréquence caractéristique de l'activité industrielle (2) associée, et de préférence un spectre sonore caractéristique de l'activité industrielle (2) associée.

4. Procédé selon l'une des revendications 1 à 3, dans lequel l'étape de mesure granulométrique (E3) est mise en œuvre au moyen d'un compteur optique de particules.

5. Procédé selon l'une des revendications 1 à 4, dans lequel l'étape de détermination (E2) est mise en œuvre en déterminant, parmi les signatures sonores de référence (S1, S2, S3) de la première base de données (4), celle la plus proche de la signature sonore courante (Sc).

6. Procédé selon l'une des revendications 1 à 5, dans lequel l'étape de détermination (E2) est mise en œuvre au moyen d'un module statistique de classification (7), de préférence de type à vecteur de support ou réseau de neurones.

7. Procédé selon la revendication 6, comportant également une étape préliminaire d'entraînement (E0) du module statistique de classification (7) à partir d'une pluralité de signatures sonores d'entraînement (Se), le module statistique de classification (7) étant configuré pour déterminer la signature sonore de référence (S1) la plus proche dans la première base de données (4).

8. Procédé selon l'une des revendications 1 à 7, ledit procédé étant également mis en œuvre au moyen d'une troisième base de données (8) comprenant une pluralité de signatures physiques de référence (P1, P2, P3), chacune étant associée à une troisième liste de types de particules (L1, L2, L3), chaque signature physique de référence (P1, P2, P3) étant caractéristique du milieu physique (3), ledit procédé comprenant :
• une étape de mesure (E5) d'une signature physique courante (Pc) du milieu physique (3),
• une étape de détermination (E6), au moyen de la troisième base de données (8), d'une troisième liste de types de particules (L1) à partir de la signature physique courante (Pc),
• l'étape de détermination (E7) étant en outre mise en œuvre par intersection avec la troisième liste de types de particules (L1).

9. Procédé selon la revendication 8, dans lequel la signature physique courante (Pc) comprend un ou plusieurs des éléments suivants : une mesure de température, une mesure d'humidité et une mesure d'odeur du milieu physique (3).

10. Système (12) de détermination dynamique d'au moins un type (Tc) de particules (1) pour la mise en œuvre du procédé selon l'une des revendications 1 à 9, les particules (1) étant émises lors de la mise en œuvre d'une activité industrielle (2) dans un milieu physique (3), ledit système (12) comprenant au moins :
• une première base de données (4) comprenant une pluralité de signatures sonores de référence (S1, S2, S3), chacune étant associée à une première liste de types de particules (M1, M2, M3), chaque signature sonore de référence (S1, S2, S3) étant caractéristique d'au moins une activité industrielle (2), et
• une deuxième base de données (5) comprenant une pluralité de signatures granulométriques de référence (G1, G2, G3), chacune étant associée à une deuxième liste de types de particules (N1, N2, N3), chaque signature granulométrique de référence (G1, G2, G3) étant caractéristique d'au moins un type de particules (1),
• un premier organe de mesure (9) configuré pour mesurer une signature sonore courante (Sc) de l'activité industrielle (2) dans le milieu physique (3),
• un deuxième organe de mesure (10) configuré pour mesurer une signature granulométrique courante (Gc) des particules (1) dans le milieu physique (3), et
• un organe de contrôle (11) configuré pour déterminer :
• au moyen de la première base de données (4), une première liste de types de particules (M1) à partir de la signature sonore courante (Sc),
• au moyen de la deuxième base de données (5), une deuxième liste de types de particules (N1) à partir de la signature granulométrique courante (Gc),
• un type (Tc) de particules (1) par intersection de la première liste de types de particules (M1) et de la deuxième liste de types de particules (N1).

## Patentansprüche

1. Verfahren zur dynamischen Bestimmung mindestens eines Typs (Tc) von Partikeln (1), wobei die Partikel (1) bei der Ausübung einer industriellen Tätigkeit (2) in eine physikalische Umgebung (3) abgegeben werden, wobei das Verfahren durchgeführt wird unter Verwendung von mindestens:
• einer ersten Datenbank (4), die eine Vielzahl von Referenz-Schallsignaturen (S1, S2, S3) umfasst, die jeweils einer ersten Partikeltypenliste (M1, M2, M3) zugeordnet sind, wobei jede Referenz-Schallsignatur (S1, S2, S3) für mindestens eine industrielle Tätigkeit (2) charakteristisch ist, und
• einer zweiten Datenbank (5), die eine Vielzahl von Referenz-Korngrößensignaturen (G1, G2, G3) umfasst, die jeweils einer zweiten Partikeltypenliste (N1, N2, N3) zugeordnet sind, wobei jede Referenz-Korngrößensignatur (G1, G2, G3) für mindestens einen Typ von Partikeln (1) charakteristisch ist,
• wobei das Verfahren umfasst:
• einen Schritt des Messens des Schalls (E1) der industriellen Tätigkeit (2) in der physikalischen Umgebung (3), um eine aktuelle Schallsignatur (Sc) zu bestimmen,
• einen Schritt des Bestimmens (E2) einer ersten Partikeltypenliste (M1) anhand der aktuellen Schallsignatur (Sc) unter Verwendung der ersten Datenbank (4),
• einen Schritt des Messens der Korngröße (E3) der in die physikalische Umgebung (3) abgegebenen Partikel (1), um eine aktuelle Korngrößensignatur (Gc) zu bestimmen,
• einen Schritt des Bestimmens (E4) einer zweiten Partikeltypenliste (N1) anhand der aktuellen Korngrößensignatur (Gc) unter Verwendung der zweiten Datenbank (5),
• ein Schritt des Bestimmens (E7) mindestens eines Typs (Tc) von Partikeln (1) durch Überschneidung der ersten Partikeltypenliste (M1) und der zweiten Partikeltypenliste (N1).

2. Verfahren nach Anspruch 1, wobei das Verfahren ebenfalls unter Verwendung einer Schwellenwertdatenbank (6) durchgeführt wird, die eine Vielzahl von Typen (T1, T2, T3) von Partikeln (1) umfasst, denen jeweils ein Akzeptanzschwellenwert (A1, A2, A3) zugeordnet ist, wobei das Verfahren umfasst:
• einen Schritt des Bestimmens (E8) eines Akzeptanzschwellenwerts (A1) anhand des bestimmten Typs (Tc) von Partikeln (1) unter Verwendung der Schwellenwertdatenbank (6) und
• einen Schritt des Sendens eines Alarms (E9), wenn die aktuelle Korngrößensignatur (Gc) den Akzeptanzschwellenwert (A1) überschreitet.

3. Verfahren nach einem der Ansprüche 1 und 2, wobei jede Referenzschallsignatur (S1, S2, S3) der ersten Datenbank (4) mindestens eine für die zugeordnete industrielle Tätigkeit (2) charakteristische Frequenz und vorzugsweise ein für die zugeordnete industrielle Tätigkeit (2) charakteristisches Schallspektrum umfasst.

4. Verfahren nach einem der Ansprüche 1 bis 3, wobei der Schritt des Messens der Korngröße (E3) unter Verwendung eines optischen Partikelzählers durchgeführt wird.

5. Verfahren nach einem der Ansprüche 1 bis 4, wobei der Bestimmungsschritt (E2) durchgeführt wird, indem unter den Referenzschallsignaturen (S1, S2, S3) der ersten Datenbank (4) diejenige bestimmt wird, die der aktuellen Schallsignatur (Sc) am nächsten kommt.

6. Verfahren nach einem der Ansprüche 1 bis 5, wobei der Bestimmungsschritt (E2) unter Verwendung eines statistischen Klassifizierungsmoduls (7), vorzugsweise vom Typ eines Support-Vektors oder eines neuronalen Netzes, durchgeführt wird.

7. Verfahren nach Anspruch 6, das ebenfalls einen vorbereitenden Trainingsschritt (E0) des statistischen Klassifizierungsmoduls (7) anhand einer Vielzahl von Trainings-Schallsignaturen (Se) aufweist, wobei das statistische Klassifizierungsmodul (7) ausgelegt ist, um die am nächsten liegende Referenz-Schallsignatur (S1) in der ersten Datenbank (4) zu bestimmen.

8. Verfahren nach einem der Ansprüche 1 bis 7, wobei das Verfahren ebenfalls unter Verwendung einer dritten Datenbank (8) durchgeführt wird, die eine Vielzahl von physikalischen Referenzsignaturen (P1, P2, P3) umfasst, die jeweils einer dritten Partikeltypenliste (L1, L2, L3) zugeordnet sind, wobei jede physikalische Referenzsignatur (P1, P2, P3) für die physikalische Umgebung (3) charakteristisch ist, wobei das Verfahren umfasst:
• einen Schritt des Messens (E5) einer aktuellen physikalischen Signatur (Pc) der physikalischen Umgebung (3),
• einen Schritt des Bestimmens (E6) einer dritten Partikeltypenliste (L1) anhand der aktuellen physikalischen Signatur (Pc) unter Verwendung der dritten Datenbank (8),
• wobei der Bestimmungsschritt (E7) ferner durch Überschneidung mit der dritten Partikeltypenliste (L1) durchgeführt wird.

9. Verfahren nach Anspruch 8, wobei die aktuelle physikalische Signatur (Pc) ein oder mehrere der folgenden Elemente umfasst: eine Temperaturmessung, eine Feuchtigkeitsmessung und eine Geruchsmessung der physikalischen Umgebung (3).

10. System (12) zur dynamischen Bestimmung mindestens eines Typs (Tc) von Partikeln (1) für die Durchführung des Verfahrens nach einem der Ansprüche 1 bis 9, wobei die Partikel (1) bei der Ausübung einer industriellen Tätigkeit (2) in eine physikalische Umgebung (3) abgegeben werden, wobei das System mindestens umfasst:
• eine erste Datenbank (4), die eine Vielzahl von Referenz-Schallsignaturen (S1, S2, S3) umfasst, die jeweils einer ersten Partikeltypenliste (M1, M2, M3) zugeordnet sind, wobei jede Referenz-Schallsignatur (S1, S2, S3) für mindestens eine industrielle Tätigkeit (2) charakteristisch ist, und
• eine zweite Datenbank (5), die eine Vielzahl von Referenz-Korngrößensignaturen (G1, G2, G3) umfasst, die jeweils einer zweiten Partikeltypenliste (N1, N2, N3) zugeordnet sind, wobei jede Referenz-Korngrößensignatur (G1, G2, G3) für mindestens einen Partikeltyp (1) charakteristisch ist,
• ein erstes Messelement (9), das zum Messen einer aktuellen Schallsignatur (Sc) der industriellen Tätigkeit (2) in der physikalischen Umgebung (3) ausgelegt ist,
• ein zweites Messelement (10), das zum Messen einer aktuellen Korngrößensignatur (Gc) der Partikel (1) in der physikalischen Umgebung (3) ausgelegt ist, und
• ein Steuerelement (11), das ausgelegt ist, um zu bestimmen:
• eine erste Partikeltypenliste (M1) anhand der aktuellen Schallsignatur (Sc) unter Verwendung der ersten Datenbank (4),
• eine zweite Partikeltypenliste (N1) anhand der aktuellen Korngrößensignatur (Gc) unter Verwendung der zweiten Datenbank (5),
• einen Typ (Tc) von Partikeln (1) durch Überschneidung der ersten Partikeltypenliste (M1) und der zweiten Partikeltypenliste (N1).

## Claims

1. A method for dynamically determining at least one type (Tc) of particles (1), the particles (1) being emitted during the operation of an industrial activity (2) in a physical medium (3), said method being implemented by means of at least:
• a first database (4) comprising a plurality of reference sound signatures (S1, S2, S3), each associated with a first list of particle types (M1, M2, M3), each reference sound signature (S1, S2, S3) being characteristic of at least one industrial activity (2), and
• a second database (5) comprising a plurality of reference particle size signatures (G1, G2, G3), each associated with a second list of particle types (N1, N2, N3), each reference particle size signature (G1, G2, G3) being characteristic of at least one particle type (1),
• said method comprising:
• a step of measuring the sound (E1) of the industrial activity (2) in the physical medium (3), so as to determine a common sound signature (Sc),
• a step of determining (E2), using the first database (4), a first list of particle types (M1) from the common sound signature (Sc),
• a step of measuring the particle size (E3) of the particles (1) emitted into the physical medium (3) in order to determine a common particle size signature (Gc),
• a step of determining (E4), using the second database (5), a second list of particle types (N1) from the common particle size signature (Gc),
• a step of determining (E7) of at least one type (Tc) of particles (1) by intersection of the first list of particle types (M1) and the second list of particle types (N1).

2. The method according to claim 1, said method also being implemented by means of a threshold database (6) comprising a plurality of types (T1, T2, T3) of particles (1), each being associated with an acceptance threshold (A1, A2, A3), said method comprising:
• a determination step (E8), by means of the threshold database (6), an acceptance threshold (A1) from the determined type (Tc) of particles (1), and
• a step of issuing an alarm (E9) if the common particle size signature (Gc) exceeds the acceptance threshold (A1).

3. The method according to one of claims 1 and 2, wherein each reference sound signature (S1, S2, S3) in the first database (4) comprises at least one frequency characteristic of the associated industrial activity (2), and preferably a sound spectrum characteristic of the associated industrial activity (2).

4. The method according to one of claims 1 to 3, wherein the particle size measurement step (E3) is implemented using an optical particle counter.

5. The method according to one of claims 1 to 4, wherein the determination step (E2) is implemented by determining, among the reference sound signatures (S1, S2, S3) of the first database (4), the one closest to the common sound signature (Sc).

6. The method according to one of claims 1 to 5, wherein the determination step (E2) is implemented by means of a statistical classification module (7), preferably of the support vector or neural network type.

7. The method according to claim 6, also comprising a preliminary training step (E0) of the statistical classification module (7) based on a plurality of training sound signatures (Se), the statistical classification module (7) being configured to determine the closest reference sound signature (S1) in the first database (4).

8. The method according to one of claims 1 to 7, said method also being implemented by means of a third database (8) comprising a plurality of reference physical signatures (P1, P2, P3), each being associated with a third list of particle types (L1, L2, L3), each reference physical signature (P1, P2, P3) being characteristic of the physical medium (3), said method comprising:
• a step of measuring (E5) a common physical signature (Pc) of the physical medium (3),
• a determination step (E6), by means of the third database (8), a third list of particle types (L1) from the common physical signature (Pc),
• the determination step (E7) being further implemented by intersection with the third list of particle types (L1).

9. The method according to claim 8, wherein the common physical signature (Pc) comprises one or more of the following: a temperature measurement, a humidity measurement, and an odor measurement of the physical medium (3).

10. A system (12) for dynamically determining at least one type (Tc) of particles (1) for implementing the method according to one of claims 1 to 9, the particles (1) being emitted during the operation of an industrial activity (2) in a physical medium (3), said system (12) comprising at least:
• a first database (4) comprising a plurality of reference sound signatures (S1, S2, S3), each associated with a first list of particle types (M1, M2, M3), each reference sound signature (S1, S2, S3) being characteristic of at least one industrial activity (2), and
• a second database (5) comprising a plurality of reference particle size signatures (G1, G2, G3), each associated with a second list of particle types (N1, N2, N3), each reference particle size signature (G1, G2, G3) being characteristic of at least one particle type (1),
• a first measuring device (9) configured to measure a common sound signature (Sc) of the industrial activity (2) in the physical medium (3),
• a second measuring device (10) configured to measure a common particle size signature (Gc) of the particles (1) in the physical medium (3), and
• a control device (11) configured to determine:
• by means of the first database (4), a first list of particle types (M1) from the common sound signature (Sc),
• by means of the second database (5), a second list of particle types (N1) from the common particle size signature (Gc),
• a type (Tc) of particles (1) by intersection of the first list of particle types (M1) and the second list of particle types (N1).
